# EUROPEAN PATENT SPECIFICATION

(11) **EP 1 976 755 B1**
(45) Date of publication and mention of the grant of the patent: **02.09.2009**
(21) Application number: 07706208.1
(22) Date of filing: 05.01.2007
(51) Int. Cl.: B64C 27/12, B64C 27/82

(54) **VARIABLE SPEED HELICOPTER TAIL ROTOR HYDROSTATICALLY DRIVEN**
HYDROSTATISCH ANGETRIEBENER HUBSCHRAUBERHECKROTOR MIT VARIABLER GESCHWINDIGKEIT
ROTOR ANTICOUPLE D HELICOPTERE A VITESSE VARIABLE ET A COMMANDE HYDROSTATIQUE

(30) Priority: 13.01.2006 IT NA20060002
(43) Date of publication of application: 08.10.2008
(73) Proprietor: Lidak, Vladimiro, 00010 Montelibretti (IT)
(72) Inventor: Lidak, Vladimiro, 00010 Montelibretti (IT)
(74) Representative: Baldi, Claudio
(86) International application number: PCT/IT2007/000008
(87) International publication number: WO 2007/080617

(56) References cited:
- GB-A- 1 455 816
- US-A- 2 190 812
- US-A- 2 427 982
- US-A- 2 644 534

## Description

The present patent application for industrial invention relates a helicopter tail rotor and its drive system designed to be used in single main rotor helicopters.

On the one hand this rotor opposes the reaction torque developed by the main helicopter rotor, providing the helicopter with uplift and propulsion, around the vertical axis of the main rotor; on the other hand the tail rotor allows the angular position of the aircraft around the vertical axis (that is: the heading) to be determined and controlled.

For this purpose the helicopters equipped with only one main rotor, normally have a structural appendix, called tail boom, extended in the opposite direction to the motion, which at its end carries a rotor named the "tail rotor", whose rotational axis is perpendicular to the plane defined by the vertical axis of the main rotor shaft and by the longitudinal axis of the tail boom. This tail rotor consists of two or more blades, aerodynamically shaped to provide lift, connected by appropriate articulated joints to a central hub. Its rotation is driven by a 90° bevel gearbox powered by the main rotor by means of a driveshaft known as the "long shaft" since it is as long as if not longer than the tail boom itself.

The aerodynamic thrust developed by the tail rotor - rotating at almost constant speed - thanks to its eccentricity relative to the rotational axis of the main rotor, produces an opposing torque whose intensity depends on the geometric pitch of the articulated blades, which is modified through a system of levers and rods or similar devices, usually connected to a pair of linked pedals which allow the pilot to adjust the trim of the aircraft around the main rotor axis.

In current single-rotor helicopters that use the type of rotor and drive system described above, the geometrical position of the tail boom carrying the "long shaft" and tail rotor is conditioned by the minimum of free space between the boom itself and the main rotor blades. The position of the tail rotor drive axis therefore proves to be considerably lower than the ideal position located on the plane of the main rotor, giving rise to harmful dynamic phenomena.

It must also be pointed out that in the above-mentioned helicopters, the blades of the tail rotor rotate at constant speed, since they are driven by fixed-ratio mechanical devices connected to the driveshaft of the main rotor, which is known to rotate at constant speed.

These circumstances mean that - even in flight conditions with the engine power off, when there is no need to act against the torque - the tail rotor nevertheless continues to spin at the same speed, even with zero blade pitch, thus causing a useless waste of energy due to friction on the drive system and on tail rotor itself, with loss of energy of the main rotor in no-power autorotation.

A further inconvenience encountered in the helicopters described previously derives by the fact that the "long shaft" axis is orthogonal to the main rotor axis and conditions the positioning of the engine and the drive system, requiring a second bevel gearbox on the main rotor, if the engine is positioned with the shaft axis horizontal. If, however, the engine is positioned with the axis vertical, a second bevel gearbox must be mounted at the front end of the "long shaft".

Both cases create considerable engineering and design complications anyway, as well as increasing the overall weight of the transmission system.

Other anti-torque systems exist, called NOTAR, in which the torque induced by the main rotor is counteracted by air or gas jets produced by a turbine and conveyed along the tail boom, using appropriate windows to produce the desired aerodynamic effect.

The development of such systems leads to considerable construction problems, which have limited their use to turbine-powered helicopters only.

US2,644,534 discloses a structure for compensating the torque of rotors of helicopters, a structure for controlling the trust of compensating rotors and means for obtaining and maintaining pitch trim in helicopters. The preamble of claim 1 corresponds to this document.
US2,247,982 discloses an anti-torque and steering control for helicopters.

GB 1 455 816 discloses an helicopter having an anti-torque tail rotor which is provided with an hydraulic drive for said rotor.

The basic intention of the invention described herein is to avoid the difficulties mentioned above found in single-rotor helicopters currently available by creating a tail rotor and the respective drive system which is highly flexible, adaptable, easy to make and both safe and efficient to use.

A second aim of the invention is to create a tail rotor and transmission system which allow the thrust of the rotor to be regulated by varying its speed rather than the pitch of the blades, thus limiting the mechanical friction in flight conditions with the engine power off.

A third aim of the invention is to get rid of the "long shaft" , thus eliminating a source of harmful vibrations and freeing the transmission geometry from the limitations imposed by the need for such a shaft.

A fourth aim of the invention is to remove all the controls and devices required to modify the tail rotorblade pitch from the cabin, tail rotor and tail boom, so that the tail boom is free of moving parts.

A fifth aim of the invention is to eliminate the bevel gearbox needed to drive the tail rotor, leading to easier design, less wear and improved reliability.

A sixth aim of the invention is to allow the direction of the aircraft to be controlled by the tail rotor under flight conditions with engine power off.

Yet another aim of the invention is to make the geometrical position of the engine independent of the tail rotor so that the engine can be mounted with the motor shaft vertical, without the need for bevel gearbox to drive the main rotor shaft.

These and other aims to be detailed later are all satisfied by the invention of a tail rotor and transmission system for single-rotor helicopters whose basis characteristics include:
a rotor with three or more fixed, non-articulated blades; a fixed-displacement, axial cylinders hydraulic motor directly driving said fixed-blade rotor; a variable-displacement hydraulic fluid pump with axial cylinders; mechanisms to control the pump displacement connected to the pedals; pipes for the hydraulic fluid connecting from the pump to the motor.

Further characteristics and advantages of the invention will become clearer and more evident from the following description, together with reference to the enclosed drawing which illustrates one of the several possible ways of organizing the system:

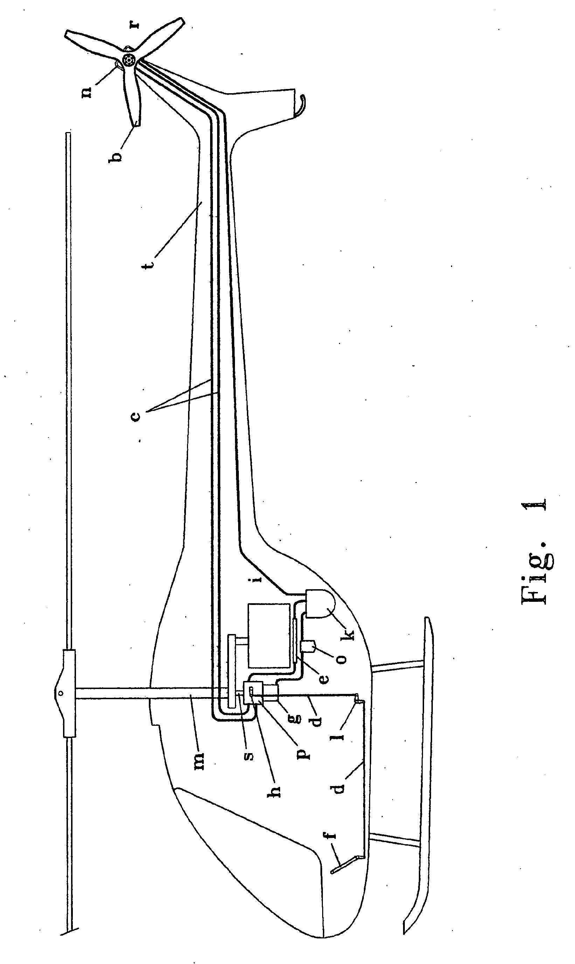

Figure 1 shows the embodiment of the tail rotor and transmission system as applied to a single-rotor helicopter.

This figure illustrates the tail rotor (r) with a minimum of three fixed-pitch blades. The rotor (r) is splined to the shaft of a standard fixed-displacement, axial cylinders (pistons) hydraulic motor, mounted at the end of the tail boom (t) and connected via rigid or flexible input and output pipes to a standard variable-displacement, axial cylinders (pistons), hydraulic pump (p) whose shaft is driven by the shaft (m) of the main rotor using normal transmission mechanisms.

The control lever (h) which adjusts the displacement and backflow of the pump (p) is connected through rods (d) and levers (I) to the pedals (f) located in the pilot's cabin. If the control lever (h) is moved to the position corresponding to maximum pump displacement by acting on the pedal in the same direction of the main rotor rotation, the flow rate of fluid to the tail rotor motor reaches maximum and hence the rotor (r) will spin at maximum speed, developing maximum thrust to oppose the reaction to torque of the main rotor. With the pedals in an intermediate position, the pump flow rate drops to zero and the rotor (r) remains motionless; this condition can be triggered by the pilot when power is lost during flight in autorotation.

If the pedals (f) is moved beyond the intermediate position, the rotation of the rotor reverses direction, thus reversing the thrust, allowing ample and total control of the aircraft around the vertical axis of the main rotor.

The pedals (f) are arranged in the usual way, with two pedals linked to the lever which varies the displacement of the pump (p) applying the same construction criteria as normally used to connect the pedals to the collective controls which modify the pitch of the articulated blades in traditional tail rotors.

At the design stage, by adjusting the ratio between the displacement of the hydraulic motor (n) and the maximum displacement of the pump (p), it is possible to vary the transmission ratio between the main rotor and the tail rotor, allowing the invention to be used in a wider range of applications.

The hydraulic fluid circuit is the hydrostatic type and includes drain pipes (i), oil tank (k), oil filter (o), a possible radiator (e) and a loading pump (g) which pump (p) is normally equipped with.

In practice, the materials used as well as the size and number of components can be varied as necessary.

## Claims

1. Tail rotor for single-main-rotor helicopters and respective drive system comprising:
- a rotor (r) consisting of fixed-pitch, non-articulated, blades (b);
- a fixed-displacement, axial cylinders, hydraulic motor directly driving the rotor (r);
- a variable-displacement, axial cylinders hydraulic pump (p) driven by the main rotor shaft (m) of the helicopter;
- a control lever (h), varying the displacement of pump (p), connected to the control pedals (f) located in the cabin; and
- hydraulic pipes (c) connecting the pump (p) to the motor (n);
**characterized by** the fact that the direction of the thrust can be changed by said control lever (h) reversing the flow of fluid through the hydraulic motor (n), thus reversing the direction of rotation of the rotor.

2. Tail rotor for single-rotor helicopters and respective drive system, according to claim 1, **characterized in that** said system is equipped with drain pipes (i), oil tank (k), oil filter (o), radiator (e) and loading pump (g).

3. Tail rotor for single-rotor helicopters and respective drive system, according to claim 1 or 2, **characterized in that** the rotor (r) comprises at least three fixed-pitch blades (b).

4. Tail rotor for single-rotor helicopters and respective drive system, according to anyone of the preceding claims, **characterized in that** the thrust magnitude can be changed by varying the rate of flow of fluid through the hydraulic motor (n), thus varying the rotation speed of rotor (r).

5. Tail rotor for single-rotor helicopters and respective drive system, according to anyone of the preceding claims, **characterized in that** the rotation speed of the tail rotor (r) drops with the reduction in the engine torque applied to the main rotor, falling to zero in the event of power loss and autorotation.

6. Tail rotor for single-rotor helicopters and respective drive system, according to anyone of the preceding claims, **characterized in that** in flight conditions involving power loss due to engine failure, pump (p) is driven by the main rotor in autorotation, and the guidance controls remain active.

## Patentansprüche

1. Heckrotor für einrotorige Hubschrauber samt dazugehöriger Antriebsanlage umfassend:
- einen Rotor (r), bestehend aus starren, nicht gelenkigen Flügeln (b),
- einen Hydraulikmotor (n) mit Axialzylindern mit festem Hubraum zum Antrieb des Rotors (r),
- eine öldynamische Pumpe (p) mit Axialzylindern mit variablem Hubraum, die von der Welle (m) des Hauptrotors des Hubschraubers angetrieben wird,
- einen Steuerhebel (h) zur Änderung des Hubraums der Pumpe (p), der mit dem in der Kabine befindlichen Steuerfußhebel (f) verbunden ist, und
- Leitungen (c) zur Hydraulikverbindung zwischen der Pumpe (p) und dem Motor (n),
**dadurch gekennzeichnet, dass** die Schubrichtung mit Hilfe des Steuerhebels (h) durch Umkehrung der Flussrichtung der Flüssigkeit, die zum Hydraulikmotor (n) fließt und der Rotationsrichtung des Rotors (r) geändert werden kann.

2. Heckrotor für einrotorige Hubschrauber samt dazugehöriger Antriebsanlage gemäß Anspruch 1, **dadurch gekennzeichnet, dass** diese Anlage mit Abflussleitungen (i), Öltank (k), Ölfilter (o), Kühler (e) und Einspeisepumpe (g) ausgestattet ist.

3. Heckrotor für einrotorige Hubschrauber samt dazugehöriger Antriebsanlage gemäß Anspruch 1 oder 2, **dadurch gekennzeichnet, dass** die starren Flügel (b) in einer Anzahl von 3 (drei) oder größer vorhanden sind.

4. Heckrotor für einrotorige Hubschrauber samt dazugehöriger Antriebsanlage gemäß jedem beliebigen der vorstehenden Ansprüche, **dadurch gekennzeichnet, dass** die Änderung der Schubintensität mittels Änderung der Durchsatzflussmenge der zum Hydraulikmotor (n) fließenden Flüssigkeit sowie der Rotationsgeschwindigkeit des Rotors (r) erfolgt.

5. Heckrotor für einrotorige Hubschrauber samt dazugehöriger Antriebsanlage gemäß jedem beliebigen der vorstehenden Ansprüche, **dadurch gekennzeichnet, dass** sich die Rotationsgeschwindigkeit des Heckrotors (r) bei Verminderung des auf den Hauptrotor aufgebrachten Antriebsdrehmoments vermindert, bis hin zur Aufhebung im leistungslosen Autorotationsflug.

6. Heckrotor für einrotorige Hubschrauber samt dazugehöriger Antriebsanlage gemäß jedem beliebigen der vorstehenden Ansprüche, **dadurch gekennzeichnet, dass** die Pumpe (p) im leistungslosen Flug bei stehenden Motoren vom selbstrotierenden Hauptrotor angetrieben wird und die Richtungssteuerung aktiv bleibt.

## Revendications

1. Rotor arrière pour hélicoptères à un seul rotor et relative installation d'actionnement comprenant :
- un rotor (r) composé de pales (b) à pas fixe non articulées,
- un moteur hydraulique (n) à cylindres axiaux ayant cylindrée fixe, qui actionne le rotor (r),
- une pompe oléodynamique (p) à cylindres axiaux ayant cylindrée variable, activée par l'arbre (m) du rotor principal de l'hélicoptère,
- un levier de commande (h) de variation de la cylindrée de la pompe (p) branché moyennant le pédalier de commande (f) positionné dans la cabine, et
- des tuyaux (c) de raccordement hydraulique entre la pompe (p) et le moteur (n),
**caractérisé en ce que** la direction du sens de la poussée peut être variée moyennant le dit levier de commande (h), en invertissant la direction du flux du fluide qui arrive au moteur hydraulique (n), ainsi que le sens de rotation du rotor (r)

2. Rotor arrière pour hélicoptères à un seul rotor et relative installation d'actionnement, selon la revendication 1, **caractérisé en ce que** la dite installation est complétée de tuyauteries de drainage (i), de réservoir d'huile (k), de filtre de l'huile (o), de radiateur (e) et de pompe de chargement (g).

3. Rotor arrière pour hélicoptères à un seul rotor et relative installation d'actionnement, selon la revendication 1 ou 2, **caractérisé en ce que** les pales (b) à pas fixe du rotor (r) sont au nombre de 3 (trois) ou plus.

4. Rotor arrière pour hélicoptères à un seul rotor et relative installation d'actionnement, selon l'une quelconque des revendications précédentes, **caractérisé en ce que** la variation de l'intensité de la poussée s'effectue en variant le débit du flux du fluide qui arrive au moteur hydraulique (n), ainsi que la vitesse de rotation du rotor (r).

5. Rotor arrière pour hélicoptères à un seul rotor et relative installation d'actionnement, selon l'une quelconque des revendications précédentes, **caractérisé en ce que** la vitesse de rotation du rotor arrière (r) diminue en fonction de la réduction du couple-moteur appliquée au moteur principal jusqu'au point de s'annuler lors du vol en autorotation sans puissance.

6. Rotor arrière pour hélicoptères à un seul rotor et relative installation d'actionnement, selon l'une quelconque des revendications précédentes, **caractérisé en ce que** lors de conditions de vol sans puissance avec les moteurs à l'arrêt, la pompe (p) est activée par le rotor principal en autorotation et la commande directionnelle reste activée.
